# EUROPÄISCHE PATENTANMELDUNG

(11) **EP 0 685 957 A2**
(43) Veröffentlichungstag der Anmeldung: **06.12.1995**
(21) Anmeldenummer: 95890101.9
(22) Anmeldetag: 31.05.1995
(51) Int. Cl.: H04M 3/50, H04M 3/42

(54) **Fernsprechvermittlungsanlage mit Sprachspeichereinrichtung**

(30) Priorität: 01.06.1994 AT 1120/94
(71) Anmelder: Alcatel Austria Aktiengesellschaft, A-1210 Wien (AT)
(72) Erfinder: Eckhart, Wolfgang, A-1210 Wien (AT)
(74) Vertreter: Pohl, Herbert, Dipl.-Ing

(57) **Zusammenfassung**

Fernsprechvermittlungsanlage (1) mit einer Rückrufeinrichtung sowie einer Sprachspeichereinrichtung (7), die imstande ist, von einem ersten Teilnehmer (2) eintreffende und für einen zweiten Teilnehmer (3) bestimmte Sprachnachrichten in einer dem zweiten Teilnehmer (3) zugeordneten Mailbox (9) zu speichern und nach Aufforderung durch den zweiten Teilnehmer an diesen abzusenden. Die Fernsprechvermittlungsanlage (1) wird von einer Steuereinrichtung (5) gesteuert, die Steuerprozesse (10) zur Ansteuerung der gewünschten Mailbox (9) sowie ein Rufnummern-Register (6), das durch den Steuerprozeß (10) belegt wird, enthält. Im Falle daß bei einem Anruf durch den ersten Teilnehmer (2) alle Verbindungswege (x,y,z) zur Sprachspeichereinrichtung (7) besetzt sind und der erste Teilnehmer (2) daraufhin einen Rückruf bucht, speichert der Steuerprozeß (10) sowohl die Rufnummer der Sprachspeichereinrichtung (7) als auch die Rufnummer des zweiten Teilnehmers (3), hält nach Freiwerden eines Verbindungsweges (x,y,z) diesen für den ersten Teilnehmer (2) frei, ruft den ersten Teilnehmer und verbindet nach Abheben des ersten Teilnehmers (2) diesen mit der Sprachspeichereinrichtung (7). Der Steuerprozeß (10) belegt ein Rufnummern-Registers (6) und sendet die Rufnummer des zweiten Teilnehmers (3) an die Sprachspeichereinrichtung (7), die daraufhin den ersten Teilnehmer (2) mit der Mailbox (9) des zweiten Teilnehmers (3) verbindet.

## Beschreibung

Die Erfindung betrifft ein Verfahren zur Abspeicherung von Sprachnachrichten in einer Fernsprechvermittlungsanlage mit einer Sprachspeichereinrichtung, die imstande ist, von einem ersten Teilnehmer eintreffende und für einen zweiten Teilnehmer bestimmte Sprachnachrichten in einer dem zweiten Teilnehmer zugeordneten Mailbox zu speichern und nach Aufforderung durch den zweiten Teilnehmer an diesen abzusenden, wobei die Fernsprechvermittlungsanlage von einer Steuereinrichtung gesteuert wird, die Steuerprozesse zur Ansteuerung der gewünschten Mailbox sowie ein Rufnummern-Register, das durch den Steuerprozeß belegt wird, enthält, wobei im Falle daß bei einem Anruf durch den ersten Teilnehmer alle Verbindungswege zur Sprachspeichereinrichtung besetzt sind und der erste Teilnehmer daraufhin einen Rückruf bucht, der Steuerprozeß die Rufnummer der Sprachspeichereinrichtung speichert, nach Freiwerden eines Verbindungsweges diesen für den ersten Teilnehmer freihält und den ersten Teilnehmer ruft, nach Abheben des ersten Teilnehmers diesen mit der Sprachspeichereinrichtung verbindet. Die Erfindung betrifft weiters auch eine Fernsprechvermittlungsanlage mit einer Rückrufeinrichtung sowie einer Sprachspeichereinrichtung zur Durchführung des Verfahrens.

Telefonvermittlungsanlagen mit Sprachspeichereinrichtungen sind bereits bekannt und werden in der Fachsprache meist als Voicemaileinrichtungen bezeichnet. Derartige Einrichtungen sind beispielsweise in der EP 0 087 849 und in der EP 0 336 524 sehr ausführlich beschrieben. Ein Verfahren und eine Anordnung zur Abspeicherung von Fernmeldenachrichten in einer Fernmeldenebenstellenanlage ist auch aus der EP 0 304 653 bekannt.

Aufgabe dieser Einrichtungen ist es, daß Teilnehmer, die vorübergehend nicht erreichbar sind, eine fixe Rufumleitung zur Sprachspeichereinrichtung einleiten, bzw. eine Rufumleitung nach einer vorgegebenen Wartezeit eingeleitet wird, wenn sich der Teilnehmer nicht meldet.

Wird nun zu einer Sprachspeichereinrichtung umgeleitet und diese meldet sich, so wird von der Telefonanlage die Nummer des gerufenen Teilnehmers mit DTMF-(Zweiton-Mehrfrequenz) -Signalen signalisiert, wodurch der rufende Teilnehmer automatisch mit der persönlichen Mailbox des gerufenen Teilnehmers verbunden ist.

Sind nun alle Pforten einer Sprachspeichereinrichtung besetzt, so hat der Teilnehmer keine Möglichkeit, auf die persönliche Mailbox des gerufenen Teilnehmers zu buchen.

Aus der EP 0 557 777 ist eine Rückrufeinrichtung bekannt, die auch den Anschluß von Sprachspeichereinrichtungen erlaubt.

Mit derartigen Einrichtungen kann der Teilnehmer zwar einen Rückruf zu einer solchen Mailbox buchen und nach erfolgtem Rückruf wird der Teilnehmer mit der Sprachspeichereinrichtung verbunden, er befindet sich jedoch dann im sogenannten Hauptmenü der Sprachspeichereinrichtung. Erst durch neuerliches Wählen der Rufnummer des gerufenen Teilnehmers mittels DTMF-Signalen, wofür ein entsprechender Fernsprechapparat notwendig ist, wird der rufende Teilnehmer mit der persönlichen Mailbox dieses gerufenen Teilnehmers verbunden.

Es ist Aufgabe der vorliegenden Erfindung diesen Nachteil zu beseitigen, sodaß nach Freiwerden eines Verbindungsweges nicht nur der Verbindungsaufbau zur Sprachspeichereinrichtung, sondern auch die Verbindung zur persönlichen Mailbox des gerufenen Teilnehmers automatisch erfolgt.

Die Erfindung löst diese Aufgabe dadurch, daß der Steuerprozeß auch die Rufnummer des zweiten Teilnehmers speichert und nach Durchführung des Rückrufvorganges ein Rufnummern-Registers belegt und die Rufnummer des zweiten Teilnehmers an die Sprachspeichereinrichtung sendet, die daraufhin den ersten Teilnehmer mit der Mailbox des zweiten Teilnehmers verbindet.

Es ist also nicht mehr notwendig, manuell die Nummer des vorher gerufenen Teilnehmers zu wählen, um in die persönliche Mailbox des gerufenen Teilnehmers zu kommen.

Die Erfindung wird nun anhand eines in der Fig. dargestellten Ausführungsbeispiels näher beschrieben.

An die Fernsprechvermittlungseinrichtung 1 sind über die Pforten a...z Teilnehmerendeinrichtungen angeschlossen. Im vorliegenden Beispiel sind die Pforten a...w für den Anschluß von Telefonapparaten vorgesehen und die Pforten x,y,z sind für den Anschluß einer Sprachspeichereinrichtung vorgesehen.

Die Vermittlungseinrichtung 1 enthält ein Koppelfeld 4 über das in bekannter Weise die Endeinrichtungen 2,3,7 miteinander verbunden werden, und das von einem Steuerprogramm 5 gesteuert wird.

Der Teilnehmer 2 ruft nun beispielsweise den Teilnehmer 3, wodurch im Steuerprogramm 5 ein Steuerprozess 10 gestartet wird, der zur Steuerung nur dieses Rufes zur Verfügung steht. Es existiert also pro Gespräch jeweils ein Steuerprozess 10.

Teilnehmer 3 ist jedoch zur Zeit nicht sprechbereit, und hat seinen Anschluß zur Sprachspeichereinrichtung 7 umgeleitet. Sollte der Teilnehmer 3 keine Rufumleitung aktiviert haben, so kann auch nach Ablauf einer vorgegebenen Rufzeit, diese Umleitung automatisch erfolgen.

Ist nun der Ruf des Teilnehmers 2 zu einer Sprachspeichereinrichtung 7 umgeleitet, ist eine Pforte frei und meldet sich die Sprachspeichereinrichtung 7, so wird der Sprachspeichereinrichtung 7 über ein DTMF-Register 6, das durch den Steuerprozess 10 belegt wird, die Nummer des Teilnehmers 3 mit DTMF Signalen gesendet. Der Teilnehmer 2 wird mit der persönlichen Mailbox 9 des Teilnehmers 3 in der Sprachspeichereinrichtung 7 verbunden und kann nun Nachrichten aufsprechen.

Dieser Vorgang wird in der Regel durch Auflegen des Teilnehmers 2 beendet. Die entsprechende Pforte der Sprachspeichereinrichtung ist daraufhin für die nächste Belegung frei und der Steuerprozess 10 wird wieder gestoppt.

Das DTMF-Register 11 wird sofort, nachdem die Nummer des Teilnehmers 3 zur Sprachspeichereinrichtung 7 gesendet wurde, vom Steuerprozess 10 wieder freigegeben.

Beim Teilnehmerapparat 3 wird über eine LED oder durch ein Display 8 angezeigt, daß Nachrichten in der Sprachspeichereinrichtung warten.

Wird nun ein Ruf vom Teilnehmer 2 an Teilnehmer 3 umgeleitet, und alle Sprachspeicherpforten x,y,z der Sprachspeichereinrichtung 7 sind momentan besetzt, so erhält der Teilnehmer 2 einen Wahlaufforderungston, der ihm die Möglichkeit eines automatischen Rückrufes anbietet.

Teilnehmer 2 bucht in bekannter Weise einen Rückruf. Der Steuerprozess 10 speichert in bekannter Weise die Nummer der Sprachspeichereinrichtung 7 für den Rückruf und zusätzlich die Rufnummer des gerufenen Teilnehmers 3 für die Sprachspeicher-Funktion beim nachfolgenden Rückruf.

Teilnehmer 2 legt auf. Der Steuerprozess 10 bleibt weiter aktiv und wartet auf Freiwerden einer Sprachspeicherpforte x,y oder z.

Wird nun eine Sprachspeicherpforte x frei, so wird sie vom Steuerprozess 10 reserviert, der Teilnehmer 2 wird gerufen und hebt ab. Nun wird vom Steuerprozess 10 die Sprachspeicherpforte x gerufen und die Sprachspeichereinrichtung 7 meldet sich.

Dieser Vorgang entspricht bis jetzt noch dem eines bereits bekannten Rückrufes.

Nun wird jedoch vom Steuerprozess 10 ein DTMF-Register 6 belegt und an die Sprachspeichereinrichtung 7 die Rufnummer des Teilnehmers 3 mittels DTMF-Signalen gesendet. Der Teilnehmer 2 wird nun automatisch mit der persönlichen Mailbox 9 des Teilnehmers 3 in der Sprachspeichereinrichtung 7 verbunden und kann jetzt Nachrichten aufsprechen. Das DTMF-Register 6 wird vom Steuerprozess 10 wieder freigegeben.

Der weitere Ablauf erfolgt wie oben beschrieben.

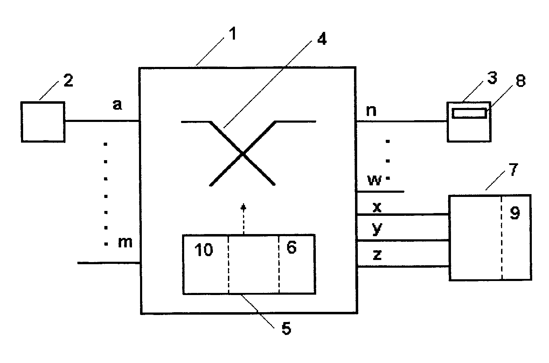

## Patentansprüche

1. Fernsprechvermittlungsanlage (1) mit einer Rückrufeinrichtung sowie einer Sprachspeichereinrichtung (7), die imstande ist, von einem ersten Teilnehmer (2) eintreffende und für einen zweiten Teilnehmer (3) bestimmte Sprachnachrichten in einer dem zweiten Teilnehmer (3) zugeordneten Mailbox (9) zu speichern und nach Aufforderung durch den zweiten Teilnehmer an diesen abzusenden, wobei die Fernsprechvermittlungsanlage (1) von einer Steuereinrichtung (5) gesteuert wird, die Steuerprozesse (10) zur Ansteuerung der gewünschten Mailbox (9) sowie ein Rufnummern-Register (6), das durch den Steuerprozeß (10) belegt wird, enthält, wobei im Falle daß bei einem Anruf durch den ersten Teilnehmer (2) alle Verbindungswege (x,y,z) zur Sprachspeichereinrichtung (7) besetzt sind und der erste Teilnehmer (2) daraufhin einen Rückruf bucht, der Steuerprozeß (10) die Rufnummer der Sprachspeichereinrichtung (7) speichert, nach Freiwerden eines Verbindungsweges (x,y,z) diesen für den ersten Teilnehmer (2) freihält und den ersten Teilnehmer ruft, nach Abheben des ersten Teilnehmers (2) diesen mit der Sprachspeichereinrichtung (7) verbindet, **dadurch gekennzeichnet**, daß der Steuerprozeß (10) auch die Rufnummer des zweiten Teilnehmers (3) speichert und nach Durchführung des Rückrufvorganges ein Rufnummern-Registers (6) belegt und die Rufnummer des zweiten Teilnehmers (3) an die Sprachspeichereinrichtung (7) sendet, die daraufhin den ersten Teilnehmer (2) mit der Mailbox (9) des zweiten Teilnehmers (3) verbindet.

2. Verfahren zur Abspeicherung von Sprachnachrichten in einer Fernsprechvermittlungsanlage (1) mit einer Sprachspeichereinrichtung (7), die imstande ist, von einem ersten Teilnehmer (2) eintreffende und für einen zweiten Teilnehmer (3) bestimmte Sprachnachrichten in einer dem zweiten Teilnehmer (3) zugeordneten Mailbox (9) zu speichern und nach Aufforderung durch den zweiten Teilnehmer an diesen abzusenden, wobei die Fernsprechvermittlungsanlage (1) von einer Steuereinrichtung (5) gesteuert wird, die Steuerprozesse (10) zur Ansteuerung der gewünschten Mailbox (9) sowie ein Rufnummern-Register (6), das durch den Steuerprozeß (10) belegt wird, enthält, wobei im Falle daß bei einem Anruf durch den ersten Teilnehmer (2) alle Verbindungswege (x,y,z) zur Sprachspeichereinrichtung (7) besetzt sind und der erste Teilnehmer (2) daraufhin einen Rückruf bucht, der Steuerprozeß (10) die Rufnummer der Sprachspeichereinrichtung (7) speichert, nach Freiwerden eines Verbindungsweges (x,y,z) diesen für den ersten Teilnehmer (2) freihält und den ersten Teilnehmer ruft, nach Abheben des ersten Teilnehmers (2) diesen mit der Sprachspeichereinrichtung (7) verbindet**, dadurch gekennzeichnet**, daß der Steuerprozeß (10) auch die Rufnummer des zweiten Teilnehmers (3) speichert und nach Durchführung des Rückrufvorganges ein Rufnummern-Registers (6) belegt und die Rufnummer des zweiten Teilnehmers (3) an die Sprachspeichereinrichtung (7) sendet, die daraufhin den ersten Teilnehmer (2) mit der Mailbox (9) des zweiten Teilnehmers (3) verbindet.
